# EUROPÄISCHE PATENTSCHRIFT

(11) **EP 1 304 522 B1**
(45) Veröffentlichungstag und Bekanntmachung des Hinweises auf die Patenterteilung: **22.08.2007**
(21) Anmeldenummer: 02022432.5
(22) Anmeldetag: 04.10.2002
(51) Int. Cl.: F16L 37/22, F16L 37/23, F16L 37/42

(54) **Entlüftungskupplung mit Kraftkompensation an der Betätigungshülse**
Vent coupling with force compensation at the operating sleeve
Raccord à évent avec compensation des forces au niveau de la douille de manoeuvre

(30) Priorität: 15.10.2001 DE 10150561
(43) Veröffentlichungstag der Anmeldung: 23.04.2003
(73) Patentinhaber: Rectus GmbH, 71735 Eberdingen-Nussdorf (DE)
(72) Erfinder: Seifert, Jürgen, 71665 Ensingen (DE); Simon, Horst, 51643 Gummersbach (DE)
(74) Vertreter: Rüger, Barthelt & Abel Patentanwälte

(56) Entgegenhaltungen:
- EP-A- 0 536 434
- EP-A- 1 006 308

## Beschreibung

Bei sogenannten Entlüftungskupplungen wird der Stecker in zwei unterschiedlichen Stellungen in dem Buchsenteil gehalten. In der einen Stellung sind der Stecker und der Buchsenteil gasdicht miteinander gekuppelt, wobei ein in dem Buchsenteil enthaltenes Ventil von dem Stecker in der geöffneten Stellung gehalten wird.

Die zweite Stellung ist eine sogenannte Entlüftungsstellung. In der Entlüftungsstellung ist das Ventil im Buchsenteil geschlossen. Der Stecker wird formschlüssig im Buchsenteil festgehalten und das Gas, das in der Schlauchleitung enthalten ist, die mit dem Stecker verbunden ist, kann abströmen. Die Entlüftungsstellung soll verhindern, dass das unter Druck stehende Gas in der Schlauchleitung des Steckers den Stecker mit großer Kraft aus dem Buchsenteil herausschleudert.

Um den Stecker in den unterschiedlichen Stellungen festzuhalten, enthält der Buchsenteil beweglich geführte Verrieglungsmittel und beweglich geführte Haltemittel. Die Bewegung der Verriegelungs- und der Haltemittel wird über eine Betätigungshülse gesteuert, die auf dem Buchsenteil längs verschieblich gelagert ist. Wenn sich die Betätigungshülse in einer neutralen Stellung befindet, können die Verriegelungselemente einrasten und auch die Halteelemente wirksam werden. Durch eine Bewegung der Betätigungshülse, üblicherweise eine translatorische Bewegung in Richtung von dem Stecker weg, erfolgt ein Auslösen der Verriegelungselemente. Der Stecker kann sich in die Halteoder Entlüftungsstellung bewegen und wird in dieser Stellung festgehalten. Das Freigeben aus der Halte- oder Entlüftungsstellung geschieht, indem die Betätigungshülse aus der Neutralstellung in Richtung auf den Stecker vorgeschoben wird.

Beim Entlüften strömt das Gas obendrein in die Betätigungshülse. Aufgrund der dynamischen Verhältnisse entsteht in der Betätigungshülse eine Kraft, die bestrebt ist, die Betätigungshülse in jene Richtung zu verschieben, in der das Freigeben aus der Entlüftungsstellung erfolgt. Das Gas strömt hierbei durch die Öffnungen, in der die Verriegelungs- und die Haltemittel sitzen, in den Ringraum zwischen dem Buchsenteil und der Betätigungshülse.

Es ist verständlich, dass dieser Effekt nicht ungefährlich ist, weil der Benutzer eigentlich erwartet, dass der Stecker in der Entlüftungsstellung festgehalten wird. Er geht davon aus, dass der Stecker nicht von Hand festgehalten werden muss. Gefährlich wird die Sache, wenn der Stecker dann dennoch aus dem Buchsenteil herausgeschossen wird. Um diesen Effekt zu vermeiden, ist in der EP 1 006 308 eine Entlüftungskupplung beschrieben, die zusätzliche Mittel enthält, um die Betätigungshülse gegen ein Verschiebe infolge des Gasdrucks zu schützen.

Die bekannten Anordnung weist, wie bereits beschrieben, einen Buchsenteil auf, der mit seitlichen Öffnungen versehen ist, die in den Kanal hineinragen bzw. das Lichtraumprofil des Kanals anschneiden. In der einen Art von Öffnungen sitzen Verriegelungsstifte, die schräg bezüglich der Achse des Kanals zu bewegen sind, während die anderen Öffnungen Haltekugeln aufnehmen. Mit Hilfe einer auf dem Buchsenteil längsverschieblich gelagerten Betätigungshülse können die Verriegelungsstifte verschoben werden, damit sie den verrasteten Stecker freigeben. Haltekugeln übernehmen nach dem Freigeben durch die Haltestifte ein arretierendes Steckers in der Entlüftungsstellung.

Damit die Betätigungshülse nicht durch den Gasdruck in die Freigabestellung bewegt werden kann, sind zusätzliche Entlüftungskanäle vorgesehen, durch die das unter Druck stehende Gas an der Betätigungshülse vorbei ins Freie geleitet werden soll.

Die bekannte Anordnung macht von einer Aufteilung der Gasströme Gebrauch. Ein Teil des entlüfteten Gases strömt in den Ringraum, zwischen Buchsenteil und Betätigungshülse und von dort über die vorhandene Spalte ins Freie. Ein anderer Teil des entlüfteten Gases strömt durch in dem Buchsenteil vorhandene besondere Kanäle unmittelbar ins Freie. Dadurch wird der Druckanstieg in dem Ringraum vermindert, so dass die Vorspannfeder in der Lage ist, die Betätigungshülse in der Neutralstellung zu halten.

Ausgehend hiervon ist es Aufgabe der Erfindung, einen Buchsenteil für eine Entlüftungskupplung zu schaffen, die in einer anderen Art und Weise eine Verschiebung der Betätigungshülse infolge des in der Entlüftungsstellung abströmenden Gases verhindert.

Diese Aufgabe wird erfindungsgemäß durch den Buchsenteil mit den Merkmalen des Anspruches 1 gelöst.

Bei dem neuen Buchsenteil sind wie beim Stand der Technik Verriegelungs- und Haltekörper vorgesehen, mit denen der eingeführte Stecker wahlweise in der einen oder anderen Stellung in dem Kanal des Buchsenteils festgehalten wird. Die Verriegelungs- und die Haltekörper sitzen hierzu in entsprechenden Öffnungen, die in das Lichtraumprofil des Kanals führen bzw. dieses Anschneiden.

Die Bewegung bzw. der Freiraum der Verriegelungs- und der Haltekörper wird wiederum, wie beim Stand der Technik üblich, durch eine Betätigungshülse festgelegt oder gesteuert. Durch Federmittel wird die Betätigungshülse in einer Neutralstellung gehalten, in der die Verriegelungskörper oder die Haltekörper im Sinne eines Festhaltens des Steckers in der jeweiligen Stellung wirksam werden können.

Zwischen dem Außenumfang des Buchsenteils und der Betätigungshülse wird ein Ringraum festgelegt, in dem beim Entlüften das unter Druck stehende Gas einströmt. Die Erfinder haben festgestellt, dass die ungewünschte Verschiebung der Betätigungshülse aufgrund von unterschiedlich großen stirnseitigen Flächen zustande kommt, die mit der Betätigungshülse verbunden sind und auf denen der Druck des Gases lastet.

Aufgrund der Herstellungsverhältnisse ist beim Stand der Technik die vordere Fläche, die mit der Betätigungshülse verbunden ist, größer als die rückwärtige Fläche. Hierdurch entsteht eine Kraftdifferenz mit einem zur Vorderseite des Buchseneteils zeigenden Kraftkomponente, die die Betätigungshülse gegen die Wirkung der Feder verschiebt.

Erfindungsgemäß sind die Ring- oder Reaktionsflächen an der Betätigungshülse so gestaltet, dass die Fläche, an der eine Kraft entsteht, die betstrebt ist, die Betätigungshülse nach hinten zu verschieben, größer ist, als alle übrigen Flächen an der Vorderseite der Betätigungshülse. Hierdurch wird erreicht, dass die Kraft, die bestrebt ist, die Betätigungshülse nach vorne zu schieben, höchstens so groß ist, wie die Kraft in der entgegengesetzten Richtung zuzüglich der Haltekraft durch die Vorspannfeder.

Um die gewünschten Flächenverhältnisse zustande zu bringen, kommen zwei Lösungsmöglichkeiten in Betracht, die auch miteinander kombiniert werden können. Die eine Lösung sieht vor, den zur Führungs zur Betätigungshülse unvermeidlichen Bund, der von der Betätigungshülse radial nach innen vorspringt und mit dem sie auf dem Buchsenteil geführt ist, mit Kanälen zu durchsetzen, wodurch die effektive Fläche, an denen das Gas im Sinne einer Kraftentfaltung angreifen kann, auf das gewünschte Maß vermindert wird. Die andere Maßnahme besteht darin, den Bund als Ring auszubilden, der auf dem Buchsenteil befestigt ist. Bei der letztgenannten Ausführung weist die Betätigungshülse praktisch keine Flächen mehr auf, an denen das Gas eine nach vorne gerichtete Kraft erzeugen kann.

Je nach den Einbauverhältnissen kann die letztgenannte Lösung unter Umständen nicht unmittelbar und vollständig ausgeführt werden. Die erforderlichen Anlageflächen für die Halte- und Verriegelungskörper bedingen unter Umständen zwangsläufig solche störenden Flächen, die allerdings sehr klein sind.

Insbesondere ist die erfindungsgemäße Lösung auch auf solche Entlüftungskupplungen anzuwenden, bei denen die Betätigungshülse zum Entriegeln des Steckers aus der gasdichten Stellung in Umfangsrichtung gedreht wird. Eine solche Lösung ist beispielsweise in der DE 101 47 505 A1 beschrieben.

Die Verriegelungskörper sind bevorzugt Verriegelungsstifte, die in entsprechenden Schrägschlitzen sitzen.

Damit der Stecker nach dem Entriegeln mit Sicherheit in der Entlüftungsstellung gefangen wird, sind die seitlichen Öffnungen für den Verriegelungs- und den Haltekörper so gestaltet, dass sie sich bezogen auf die Axialerstreckung überlappen, d.h. die einander benachbarten Enden der ersten und der zweiten seitlichen Öffnung liegen bezogen auf die Längserstreckung der Achse des Kanals auf gleicher Höhe.

Die seitlichen Öffnungen für die Haltekörper sind zweckmäßigerweise Langlöcher, in denen Haltekörper geführt sind, die in das Lichtraumprofil des Kanals hineinragen können.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung sind Ausführungsbeispiele des Gegenstandes der Erfindung dargestellt. Es zeigen:
- Fig. 1: eine Explosionsdarstellung der wesentlichen Teile eines erfindungsgemäßen Buchsenteils in einer perspektivischen Darstellung,
- Fig. 2: den Buchsenteil nach Figur 1 in einem Querschnitt längs der Linie II- II nach Figur 3,
- Fig. 3 - 7: den Buchsenteil nach Figur 1 in einem Längsschnitt, geschnitten längs der Linie III-III nach Figur 2, in Verbindung mit einem Stecker in unterschiedlichen Betriebsstellungen,
- Fig. 8: ein weiteres Ausführungsbeispiel des erfindungsgemäßen Buchsenteils, in einer Explosionsdarstellung mit den wesentlichen Teilen und
- Fig. 9: den Buchsenteil nach Figur 1 in einem Längsschnitt, geschnitten in einer ähnlichen Weise wie Figur 3.

Der Einfachheit halber wird in der nachfolgenden Figurenbeschreibung der Begriff vorne und hinten in Verbindung mit dem Buchsenteil verwendet. Dieser Sprachgebrauch dient der Vereinfachung der Beschreibung. Dabei soll "vorne" oder "nach vorne", jenen Ort oder jener Richtung bezeichnen, von der her ein Stecker in den Buchsenteil eingeführt wird, während "hinten" oder "nach hinten" jenen Ort oder jene Richtung bezeichnet, an der der Buchsenteil an einem Zuleitungssystem für unter Druck stehendes Fluid, beispielsweise Druckgas, angeschlossen ist.

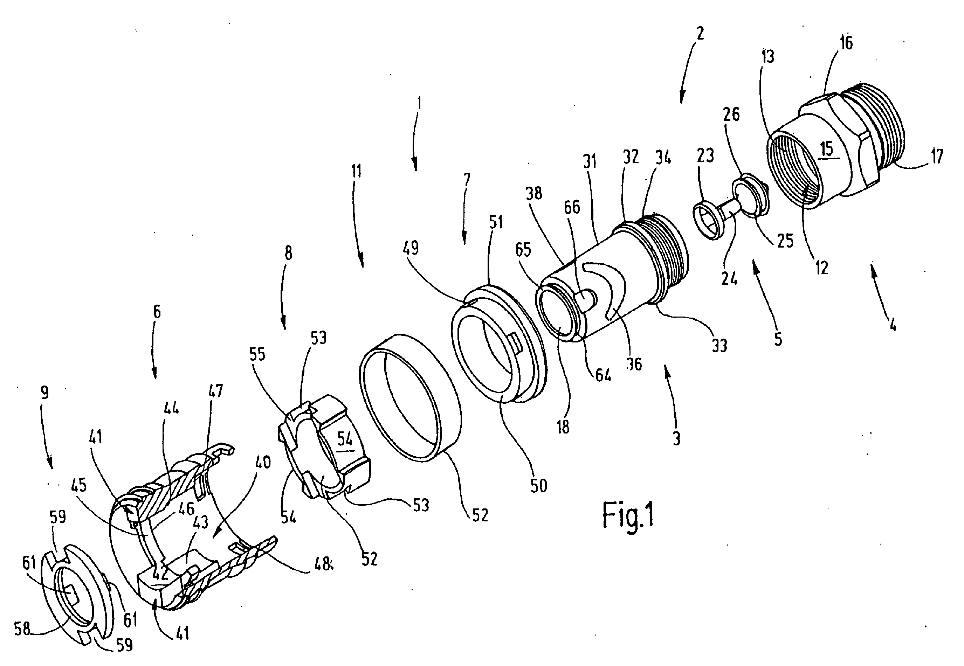

Figur 1 zeigt in einer perspektivischen Explosionsdarstellung einen Buchsenteil 1 einer Entlüftungskupplung. Zu dem Buchsenteil 1 gehören ein Grundkörper 2, der sich aus einem vorderen Grundkörperabschnitt 3 sowie einem hinteren Grundkörperabschnitt 4 zusammensetzt, ein Ventilverschlussglied 5, eine Betätigungshülse 6 mit deren Abschluss- oder Endring 7, ein Widerlagerring 8 sowie eine vorderen Verschlussscheibe 9 und ein Abdeckring 11.

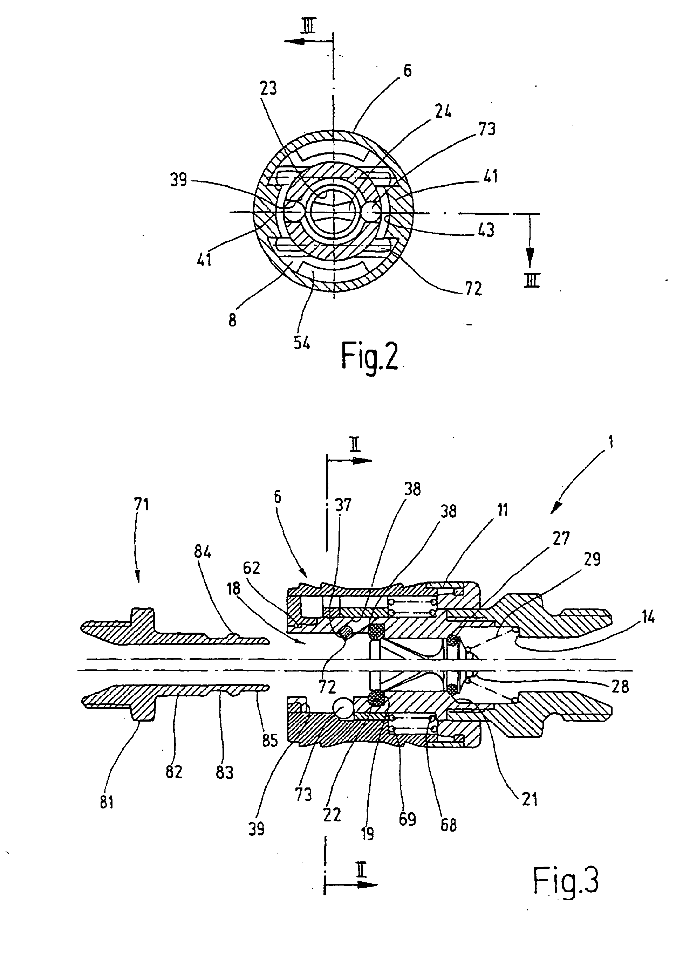

Der hintere Grundkörperabschnitt 4 ist ein im Wesentlichen rohrförmiges Gebilde mit einem rotationssymmetrischen Durchlass 12, der an seinem vorderen Ende in ein Innengewinde 13 übergeht. Im inneren verjüngt sich der Durchlass 12 an einer in Figur 3 erkennbaren Ringschulter 14 zur Rückseite hin.

Auf der Außenseite bildet der hintere Grundkörperabschnitt 4 eine zylindrische, zu dem Durchlass 12 konzentrische Umfangs- und Gleitfläche 15, die am hinteren Ende in einen Sechskantbund 16 übergeht. Die Umfangs- und Gleitfläche 15 dient als Führungsfläche für den Abschlussring 7.

An den Sechskantbund 16 schließt sich ein Außengewinde 17 an, über das der Buchsenteil 1 mit einem Rohr- oder Schlauchleitungssystem zu verbinden ist, das mit einer Quelle für Druckluft in Verbindung steht. Der vordere Grundkörperabschnitt 3 ist ebenfalls rohrförmig und mit einem rotationssymmetrischen Kanal 18 versehen.

Wie wiederum Figur 3 zeigt, hat der Kanal 18 von links her kommend einen konstanten Querschnitt bis zu einer Schulter 19. An der Schulter 19 verjüngt sich der Durchmesser des Kanals sprunghaft auf einen kleineren Durchmesser, ebenfalls mit zylindrischer Gestalt. An einer Kegelfläche 21, die als Ventilsitzfläche dient, erweitert sich der Durchmesser des Kanals 18.

Angrenzend an die Schulter 19 enthält der Kanal eine umlaufende Ringnut in der eine O-Ringdichtung 22 eingelegt ist.

Das Ventilverschlussglied 5 sitzt in dem Kanal 18. Zu dem Ventilverschlussglied 5 gehören ein vorderer Ring 23, der über zwei schrägverlaufende Streben 24 mit einem Dichtungsteller 25 verbunden ist. Der Dichtungsteller 25 ist mit einer umlaufenden Ringnut 26 versehen, in der eine O-Ringdichtung 27 liegt. An der Rückseite des Dichtungstellers 25 ist ein Zentrierzapfen 28 vorgesehen, an dem sich eine Vorspannfeder 29 abstützt. Mit Hilfe der Vorspannfeder 29 wird das Ventilverschlussglied 5 in die Schließstellung vorgespannt. In der Schließstellung liegt der Dichtungsteller 25 mit der eingelegten O-Ringdichtung 27 an der Ventilsitzfläche 21 auf. In dieser Stellung steckt der Ring 23 in dem O-Ring 22.

Die Kegelfeder 29 stützt sich mit ihrem anderen Ende an der Schulter 14 ab. Der vordere Grundkörperabschnitt 3 weist in seinem vorderen Bereich eine zylindrische Außenumfangsfläche 31 auf, die bis zu einem Bund 32 einen konstanten Querschnitt hat. Der Außendurchmesser entspricht dem Außendurchmesser der Zylinderfläche 15 des hinteren Grundkörperabschnitts 4.

An den Ringbund 32 schließt sich ein Außengewinde 34 an, mit dem der vordere Grundkörperabschnitt 3 in das Innengewinde 13 des hinteren Grundkörperabschnitts 4 eingeschraubt ist.

Im Bereich der Außenumfangsfläche 31 sind zwei schrägverlaufende Schlitze 36 enthalten, die sich bezüglich der Längs- oder Rotationsachse des Grundkörpers 2 diametral gegenüberliegen. Die Schlitze 36 ragen jeweils nur ein kurzes Stück in den Kanal 18 hinein und enden jeweils an einer Bodenfläche 37. Außerdem sind sie von zwei zueinander parallelen Seitenwänden 38 begrenzt. Die durch die Seitenwände 38 definierten Flächen der beiden Schlitze 36 konvergieren in Richtung auf das vordere Ende des Buchsenteils 1, wie dies der Querschnitt nach Figur 3 erkennen lässt.

Symmetrisch zwischen den beiden Schlitzen 36, d.h. gegenüber diesen um 90° versetzt, verlaufen zwei Langlöcher 39, die sich ebenfalls diametral gegenüberliegen. Die längere Achse der Langlöcher 39 liegt zu der Rotationsachse des Grundkörpers 2 parallel. Die Seitenwände der Langlöcher 39 sind konvergierend ausgebildet, damit die lichte Weite auf der Seite des Kanals 18 kleiner ist als auf der Seite der Außenumfangsfläche 31. Die genaue Lage der Langlöcher 39, bezogen auf die Schlitze 36, ergibt sich aus der Funktionsbeschreibung. Grundsätzlich ist jedoch an dieser Stelle festzuhalten, dass das Ende der Schlitze 36, d.h. der Schlitzgrund 37 sich etwa auf der Höhe des hinteren Endes jedes der Langlöcher 39 befindet.

Auf dem Grundkörper 2, sitzt längsverschieblich die rohrförmige Betätigungshülse 6, der Innenwand 40 einen im Wesentlichen zylindrischen Innenraum begrenzt.

Aus der zylindrischen Innenseite 40 springen diametral einander gegenüberliegend zwei Leisten 41 vor. Die Leisten 41 erstrecken sich ein Stück weit in Umfangsrichtung, etwa entsprechend dem Abstand, den die beiden Schlitze 36 an jener Stelle voneinander haben, an der sie einander am dichtesten benachbart sind. Jede Leiste 41 wird radial nach innen zu durch einen Ausschnitt aus einer Zylinderfläche begrenzt und außerdem sind die beiden Leisten 41 in Längsrichtung der Betätigungshülse gestuft ausgeführt. Es ist eine erste Anlagefläche 42 zu erkennen, die einen radial geringeren Abstand aufweist, als eine zum hinteren Ende der Betätigungshülse 6 gelegene Fläche 43, wobei die beiden Flächen über eine Schrägfläche 44 ineinander übergeht. Die Fläche 42 reicht bis zur Stirnseite der Betätigungshülse 6. Außerdem sind die beiden Leisten 41 parallelflankig begrenzt, das heißt ihre Breite in Umfangsrichtung gesehen ist an allen Stellen dieselbe. Die Anlagefläche 42 dient gleichzeitig als Führungsfläche für das vordere Ende der Betätigungshülse 6.

Etwa auf der Höhe der Schrägfläche 44, die entsprechend ein Ausschnitt aus einer Kegelmantelfläche ist, verläuft in Umfangsrichtung innerhalb der Betätigungshülse 6 ein Ringbund 45 der eine dem hinteren Ende zugekehrten Ringschulter 46 bildet. Die radiale Tiefe des Ringbundes 46 ist so bemessen, dass er glatt in die Anlagefläche 42 übergeht.

An ihrem hinteren Ende ist die Betätigungshülse 6 mit mehreren Rastöffnungen 47 versehen, in die Rastnasen 49 des Abschlussrings 7 eingreifen.

Der Abschlussring 7 setzt sich aus einem rohrförmigen Abschnitt 50 und einem Ring 51 zusammen. Der Außendurchmesser des rohrförmigen Abschnitts 50 entspricht der lichten Weite der Betätigungshülse 6, während der Außendurchmesser des Abschlussrings 51 dem Außendurchmesser der Betätigungshülse 6 entspricht.

Um die Rastlöcher 47 zu verdecken, ist der zylindrischer Abdeckring 11 vorgesehen, der auf der Außenseite der Betätigungshülse 6 sitzt, wie dies Figur 3 erkennen lässt.

Auf der Außenumfangsfläche 31 des vorderen Grundkörperabschnitts 4 sitzt verschieblich der Druckring 8, der hierzu eine zylindrische Bohrung 52 enthält. Sein Außendurchmesser entspricht dem Durchmesser der Innenumfangsfläche 40. Außerdem enthält er mehrere in Längsrichtung verlaufende Nuten. Zu diesen gehören Nuten 53 und Nuten 54 die sich jeweils paarweise gegenüberliegen. Die Weite der Nuten 53 ist so gewählt, dass durch sie die Leisten 41 hindurch verschieblich sind, während die Weiten der Nuten 54 im Wesentlichen frei wählbar ist.

Die Vorderseite des Druckrings 8, das heißt die der Vorderseite zugekehrte Stirnseite ist mit einer Querverlaufenden Nut 55 versehen, während die rückseitige Stirnfläche eine plane Ringfläche ist.

Die Weite der Nut 55 ergibt sich aus der nachfolgenden Funktionsbeschreibung.

Nach vorne wird der Buchsenteil 1 schließlich durch die bereits erwähnten Verschlussscheibe 9 verschlossen. Diese stellt eine im Wesentlichen planparallele Kreisscheibe mit einer Bohrung 58 dar, die seitlich außen zwei Schlitze 59 enthält. Die beiden Schlitze 59 liegen sich wiederum diametral gegenüber und haben Abmessungen derart, dass die Leiste 41 mit der Anlagefläche 42, das heißt ihr dickerer Abschnitt frei durch die Schlitze 59 hindurch gleiten kann. Auf der dem Buchsenteil 1 zugekehrten Seite, trägt die Verschlussscheibe 9 axial vorstehende Laschen 61.

Die Befestigung der Verschlussscheibe 9 auf dem Buchsenteil 1 geschieht mittels einer in Figur 3 erkennbaren Rastschulter oder Rastbund 62, die in eine Rastnut 64 eingreift. Die Rastnut 64 ist in der zylindrischen Außenumfangsfläche eines koaxialen rohrförmigen Fortsatzes 65 des Buchsenteils 1 ausgebildet. Im verrasteten Zustand nehmen zwei Ausnehmungen 66 die Fortsätze 61 auf.

Um die einzelnen Teile in eine Grund- oder Raststellung vorzuspannen, sind zwei zylindrische Schraubenfedern 68 und 69 vorgesehen. Die Schraubenfeder 68 stützt sich mit ihrem hinteren Ende an der Schulter 33 ab und anderenends gegen die hintere Stirnfläche des Druckrings 8. Koaxial über der Schraubedruckfeder 68 sitzt die Schraubendruckfeder 69. Sie liegt einerseits ebenfalls an der hinteren Stirnfläche des Druckrings 8 an, während das andere Ende an der Stirnfläche des rohrförmigen Fortsatzes 50 des Abschlussringes 7 anliegt. In einer entsprechenden Funktionsstellung stehen außerdem die Schultern 47 an dem vorderen Ende der Schraubendruckfeder 69 an.

Um den in Figur 3 zu erkennenden Stecker 71 zu verriegeln, sitzen in den Schrägschlitzen 36 zylinderförmige Stifte 72, deren Außendurchmesser der Weite der Schlitze 36 entspricht und die so bemessen sind, dass sie über die Außenumfangsfläche 31 überstehen wie dies Fig 2 zeigt. Die Leisten 41 liegen zwischen den Verriegelungsstiften 72. In den Langlöchern 39 sind hingegen Kugeln 73 enthalten, deren Durchmesser größer als die Dicke der Wand des Grundkörpers 2 im Bereich des jeweiligen Langloches 39.

Die Montage des beschriebenen Buchsenteils 1 sieht etwa wie folgt aus:

Das Ventilverschlussglied 5 wird mit dem Anlagering 23 voraus in den Kanal 18 eingesteckt. Nach Einfügen der Kegelfeder 29 werden der vordere und der hintere Grundkörperabschnitt 3 und 4 miteinander verschraubt. Sodann wird von vorne her auf den Grundkörper 2 der Abschlussring 7 aufgeschoben und es werden die zueinander koaxialen Federn 68 und 69 aufgesteckt. Anschließend wird der Druckring 8 aufgesetzt und soweit zu dem hinteren Ende verschoben, bis in die beiden Schrägschlitze 36 die Zylinderstifte 72 eingefügt werden können. Der Druckring 8 wird los gelassen und durch die beiden Federn 68 und 69 gegen die Zylinderstifte 72 gedrückt, die in der Nut 55 an der vorderen Stirnseite des Druckrings 8 liegen. Die Kugeln 73 werden in die Langlöcher 39 eingesetzt und dort mittels eines Magneten gehalten.

Sobald das Buchsenteil 1 insoweit vorbereitet ist, wird von der Vorderseite die Betätigungshülse 6 aufgeschoben, auf die zuvor der Abdeckring 11 aufgesetzt wurde. Beim Aufsetzen bewegen sich die Leisten 41 durch die Schlitze 53 des Druckrings 8 hindurch.

Beispielsweise mit Hilfe eines Werkzeugs wird die Betätigungshülse 6 mit ihrem Abschlussring 7 verrastet. Eine nachträgliche Demontage ist praktisch nicht möglich, weil der Deckring 52 die Rastöffnungen 48 überdeckt. Die Rastnasen 49 sind nicht mehr zugänglich und können von außen nicht aus den Rastöffnungen 48 herausgedrückt werden.

Als letzte Maßnahme wird schließlich die Verschlussscheibe 9 auf den rohrförmigen Fortsatz 65 äufgepresst und verrastet.

Bei der beschriebenen Art der Montage ist vorzugsweise der Grundkörper ein Metallteil, während der Abschlussring 7, der Druckring 8, die Betätigungshülse 6 und die vordere Verschlussscheibe 9 aus Kunststoff bestehen können.

Der Stecker 71 der zum Zusammenwirken mit dem Buchsenteil 1 vorgesehen ist, weist im Anschluss an einen Sechskantbund 81 einen rohrförmigen Fortsatz 82 mit im wesentlichen zylindrischer Außengestalt auf. In seiner Außenumfangsfläche enthält der Fortsatz 82 eine Ringnut 83 mit trapezförmigem Querschnitt, wodurch eine Rippe 84 entsteht. In deren Verlängerung geht der rohrförmige Fortsatz 82 in einen Abschnitt 85 über, dessen Außendurchmesser etwas größer ist als die von dem O-Ring 22 definierte Öffnung. Der Abschnitt 85 stellt die eigentliche Dichtfläche dar.

Die Funktion wird nachstehend anhand der Figuren 3-7 erläutert.

Bei der Betrachtung der Figuren ist zu berücksichtigen, dass in der oberen Hälfte jeder Figur der Buchsenteil 1 in einer Richtung senkrecht zu dem betreffenden Zylinderstift 72 geschnitten ist, während im unteren Teil jeder Figur der Schnitt durch eines der Langlöcher 39 führt.

Das Zusammenwirken mit dem Stecker 71 sieht wie folgt aus:

In der Ruhestellung des Buchsenteils 1 werden die Verriegelungsstifte 72 mit Hilfe der beiden Schraubendruckfedern 68 und 69 gegen den Schlitzgrund 37 gepresst. In dieser Stellung ragen sie mit einem mittleren Bereich in das Lichtraumprofil des Kanals 18 vor. Das Ventilverschlussglied 5 wird mit seinem Dichtungsteller 25 gegen den Ventilsitz 21 gedrückt. Wenn in dieser Stellung der Stecker 71 eingeführt wird, stößt zunächst die Rippe 84 an die Kugeln 73 an, die sich beispielsweise im vorderen Bereich des Langloches 39 befinden. Da an diesem Bereich sich die Anlagefläche 42 befindet, deren radialer Abstand etwa dem Außendurchmesser des zylindrischen Abschnittes 31 entspricht, werden die in diesem Bereich befindlichen Kugeln 73 radial nach innen gedrängt und kommen mit der Rippe 84 in Eingriff. Im Verlauf des weiteren Eindringens des Steckers 71 in den Kanal 18, werden die Kugeln 73 in Richtung auf das hintere Ende des jeweiligen Langloches 39 bewegt.

Nach passieren der Schrägfläche 44, kommen sie in den Bereich der hinteren Anlagefläche 43, die einen größeren Radialen Abstand voneinander haben. Der Abstand ist so gewählt, dass die Kugeln 73 aus dem Lichtraumprofil des Kanals 18 zurückweichen können. Gleichzeitig kommt die Rippe 84 mit dem vorstehenden Teil Verriegelungsstifte 72 in Eingriff und drängt diese ebenfalls zurück, wobei sie sich wegen des schrägen Verlaufes des Schlitzes 36 radial nach außen bewegen.

Hierbei nimmt außerdem der Stecker das Ventilverschlussglied 5 mit und drängt aus dem O-Ring 22 heraus, während seinerseits der Abschnitt 85 abdichtend in die von dem O-Ring 22 definierte Öffnung eindringt.

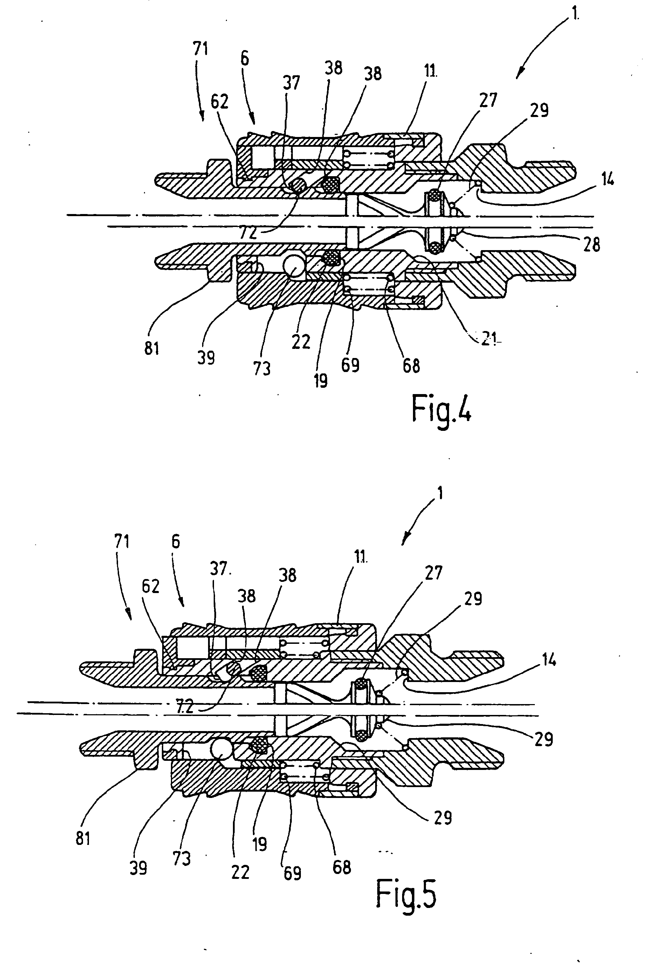

Die verrastete Stellung ist in Figur 4 gezeigt. Das Ventilverschlussglied 5 ist mit seinem Dichtungsteller 25 von dem Ventilsitz 21 abgehoben. Die Verriegelungsstifte 72 befinden sich hinter der Rippe 84 in der Ringnut 83. Hier liegen auch die Kugeln 73, die die Ringnut 83 nicht verlassen können, weil der Spalt zwischen der Außenseite des Steckers 71 und der Anlagefläche 42 kleiner als der Kugeldurchmesser ist.

Der Stecker 71 ist in dem Buchsenteil fest verrastet.

Wenn der Stecker 71 entnommen werden soll, wird zunächst die Betätigungshülse 6 bezogen auf Figur 5 nach Rechts verschoben. Hierbei kommt der Ringbund 45 mit seiner Ringschulter 46 mit den überstehenden Enden der Verriegelungsstifte 72 in Eingriff. Die Bewegung der Betätigungshülse 6 wird auf die Verriegelungsstifte 72 übertragen, die sich nach rechts bewegen und gleichzeitig radial voneinander weg zufolge des schrägen Verlaufes der beiden Schlitze 36. Bei dieser Bewegung der Betätigungshülse 6 bewegen sich die Anlageflächen 42 über die in der Ringnut 83 liegenden Kugeln 73. Die Kugeln 73 können deswegen die Ringnut 83 nicht verlassen und werden von dem Stecker 71 in Richtung auf das vordere Ende des Langlochs 39 mitgenommen, wenn der Stecker 71 aufgrund des herrschenden Drucks aus dem Buchsenteil 1 herausgeschossen wird.

Die entriegelte Stellung ist in Figur 5 gezeigt und zwar bevor der Stecker durch den Innendruck herausgedrängt ist.

Gleichgültig ob die Betätigungshülse 6 losgelassen ist oder nicht, überdeckt die Anlagefläche 42 die jeweilige Kugel 73 an ihrer dem Stecker 71 abgewandten Seite.

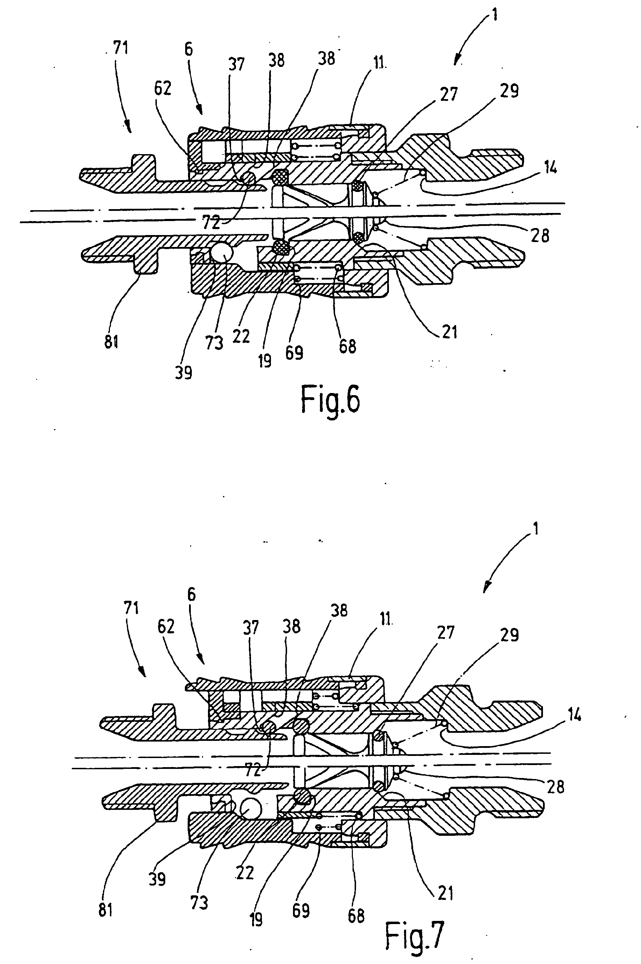

Figur 6 zeigt die Stellung bei losgelassener Betätigungshülse 6, die durch die beiden Federn 68 und 69 nach vorne, das heißt bezogen auf Figur 6 nach links verschoben ist.

In der Stellung nach Figur 6 ist das Ventilverschlussglied 5 wieder in der Stellung nach Figur 3 und sperrt den Druckraum rechts von dem Ventilverschlussglied 5 ab, während der Innenraum des Steckers 71 und die daran angeschlossene Leitung sich über die verschiedene Spalte zwischen dem Stecker und dem Buchsenteil und die Öffnungen in dem Buchsenteil 1 entlüften kann. Die Kugeln 73 sind zwischen der Anlagefläche 42 und der Nut 83 eingesperrt und halten den Stecker 71 fest

Zum vollständigen Entnehmen des Steckers 71 wird schließlich die Betätigungshülse 6, wie in Figur 7 gezeigt, nach vorne verschoben. Dieses Vorschieben geschieht entgegen der Wirkung der Feder 69, während die Feder 68 in Ruhe bleibt, da sie an dem Druckring 8 anliegt, der sich nicht mehr weiter verschieben lässt. Durch das Vorschieben der Betätigungshülse 6 wird die Anlagefläche 42 aus dem Lichtprofil des jeweiligen Langlochs 39 wegbewegt und die Kugel 73 kommt in den Bereich der Anlagefläche 43. Diese radial weiter entfernte Anlagefläche ermöglicht es der Kugel 73 aus dem Lichtprofil des Kanals zurückzuweichen, so dass die Rippe 84 passieren kann.

Wie sich aus den Schnittbildern gemäß den Figuren 3 - 7 ergibt, definiert der Buchsenteil 1 zusammen mit der Betätigungshülse 6 einen Ringraum, der in radialer Richtung durch die Außenumfangsfläche 31 und die Innenumfangsfläche 40 begrenzt ist. In axialer Richtung wird dieser Ringraum nach hinten zum Teil durch die Schulter 33 und die in die Betätigungshülse 6 ragende Stirnfläche des Abschlussrings 7 begrenzt. Die vordere Grenze des Ringraums stellt die Verschlussscheibe 9 dar und im Bereich von deren Schlitzen 59 die Leisten 41.

Wenn in der Entlüftungsstellung das Druckgas in diesen Ringraum eindringt, und zwar sowohl durch die Schlitze 36 als auch die Langlöcher 39, entsteht an den beiden in axialer Richtung liegenden Endflächen des Ringraums jeweils eine Kraft. Dabei sind solche Kräfte bedeutungslos, die an Flächen auftreten, die mit dem Buchsenteil 1 fest verbunden sind. So wirken an der Betätigungshülse 6 keine Kräfte, die an der Fläche der Schulter 33 auftreten. Gleiches gilt. für die Kräfte die an der Verschlussscheibe 9 entstehen, da auch die Verschlussscheibe 9 starr und unverrückbar mit dem Buchsenteil 1 verbunden ist. Freie Kräfte können nur auftreten an der Stirnfläche des Abschlussrings 7, das heißt einer Fläche die proportional der Ringfläche ist, die außen durch die Innenwand 40 und radial nach innen durch den Außendurchmesser der Zylinderfläche 15 begrenzt ist. Diese Ringfläche entspricht im Wesentlichen der in der Betätigungshülse 6 befindlichen Ringfläche des Abschlussrings 7.
Die nach vorne wirksamen Kräfte, die an der Betätigungshülse 6 angreifen, entsprechen nur der Querschnittsfläche der Leisten 41, gemessen ab der Zylinderfläche 31 in Richtung auf die Anlagefläche 42. Der Ringbund 45 befindet sich zur Gänze in dem besagten Ringraum, das heißt unter Vernachlässigung der dynamischen Verhältnisse, treten an der nach links zeigenden Fläche des Ringbundes 45 die selben Kräfte auf, wie an der nach rechts zeigenden Fläche, soweit diese Flächen nicht Bestandteil der Leisten 41 sind.

Wenn das Gas beim Entlüften unter hohem Druck in den Ringraum einströmt, greift es an dem Abschlussring 7 an und erzeugt dort eine nach rechts bzw. hinten gerichtet Kraft, die gleich ist dem Produkt aus dem Gasdruck multipliziert mit der wirksamen Fläche, die an die Betätigungshülse angekoppelt ist. Diese Fläche ist, wie bereits erwähnt, die Ringfläche begrenzt durch den Außenumfang der Führungsfläche 15 und der Innenumfangsfläche 40.

Nach links wirkt eine sehr viel kleinere Kraft, näherungsweise entsprechend den Flächen der beiden Schlitze 59 in der Verschlussscheibe 9. Nur diese Fläche, die von den beiden Leisten 41 gebildet wird, ist eine Fläche die ein Verschiebung der Betätigungshülse 6 nach links bewirken würde. Aufgrund der Größenverhältnisse ist diese Fläche jedoch wesentlich kleiner als die Ringfläche am hinteren rechten Ende der Betätigungshülse 6, so dass keine resultierende Kraft übrig bleibt, die die Betätigungshülse 6 nach links zum vorderen Ende in Richtung auf die Entriegelung aus der Halteposition bewegen würde. Da die hintere Ringfläche deutlich größer ist, entsteht eine nach rechts gerichtete Kraft, die bestrebt ist, die Betätigungshülse 6 in eine Position zu bringen, in der die Anlageflächen 42 die Kugeln 73 in der Ringnut 83 halten.

Unabhängig von der Stärke der Feder 69 wird die Betätigungshülse 6 allein aufgrund der Größenverhältnisse dieser Flächen daran gehindert, in die Entriegelungsstellung nach Figur 7 durch den Gasdruck geschleudert zu werden.

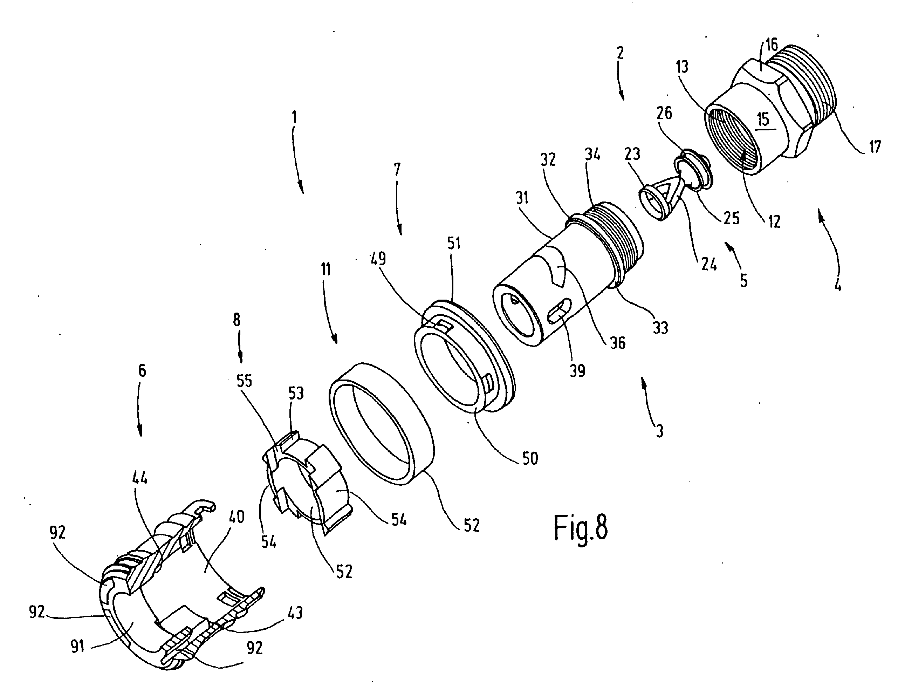

Figur 8 zeigt eine geringfügige abgewandelte Ausführungsform. Soweit bereits beschriebene Teile wiederkehren, sind sie mit dem selben Bezugszeichen versehen und nicht erläutert.

Der wesentliche Unterschied zu dem Ausführungsbeispiel nach Figur 1 besteht in dem Wegfall der Verschlussscheibe 9. Statt dessen ist die Betätigungshülse 6 in der üblichen Weise an ihrem vorderen Ende durch einen umlaufenden Ringbund 91 abgeschlossen. Der Ringbund 91 ist letztendlich nichts anderes als die Fortsetzung der Anlageflächen 42 in Umfangsrichtung. Die Anlageflächen 42 sind somit ein entsprechender Ausschnitt aus der zylindrischen Innenumfangsfläche, des Ringsbundes 41, der im übrigen auch gleichzeitig mit seiner nach innen zeigenden Schulter die Schulterfläche 46 darstellt.

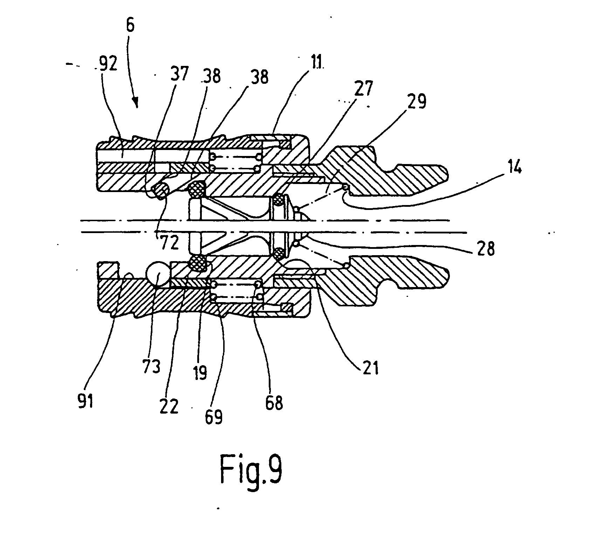

Ohne sonstige Maßnahmen wäre die dadurch erhaltene Fläche, die den Ringraum abschließt, deutlich größer, als die Ringfläche, die den Ringraum nach hinten oder nach rechts abschließt, soweit sie starr mit der Betätigungshülse 6 verbunden ist. Figur 9 lässt unschwer erkennen, dass die nach links wirkende Fläche, in der der Gasdruck angreift, um die Größe der Fläche der Schulter 33 größer ist, als die nach rechts wirksame Fläche, gebildet durch die entsprechende innenliegende Stirnseite des Abschlussrings 7. Das unter Druck einströmende Gas könnte gegen die Wirkung der Feder 69 die Betätigungshülse 6 nach links schieben, womit noch vor der vollständigen Entlüftung der Stecker 71 aus dem Buchsenteil 1 herausgeschossen würde.

Um die Flächenverhältnisse zu kompensieren, sind wie gezeigt, im Querschnitt großdimensionierte Kanäle 92 vorgesehen, die den Ringbund 91 in axialer Richtung durchsetzen. Sie befinden sich an einer Stelle, die gedanklich zwischen den Anlageflächen 41 des Ausführungsbeispiels nach Figur 1 liegen. Die Gesamtquerschnittsfläche der Durchgangskanäle 92, die den Ringraum nach außen hin belüften, ist größer als die effektive Fläche der Ringschulter 33.

Selbst wenn die Fläche der Ringschulter 33 nicht vollständig kompensiert würde, sondern die mit der Betätigungshülse 6 verbundenen Flächen, an denen die unter Druckstehende Luft angreift, gleich groß wären, ergäbe sich ein Kräftegleichgewicht, das ein Verschieben der Betätigungshülse 6 verhindert.

In allen Fällen wird durch geeignete Maßnahmen dafür gesorgt, dass die im Inneren der Betätigungshülse 6 an deren Enden eingreifende Gasdrücke Kräfte erzeugen, derart, dass die nach links zum vorderen Ende in die Entriegelungsstellung gerichtete Kraft höchstens genauso groß ist, wie die nach rechts gerichtete Kraft zzgl. der Kraft, die durch die Feder 69 aufgebracht wird. Diese Feder 69 wirkt einer Verschiebung der Betätigungshülse 6 nach links entgegen, wie dies oben ausführlich erläutert ist.

Ein Buchsenteil für eine Entlüftungskupplung enthält einen Satz von Verriegelungsgliedern, um den Stecker in der fluiddichtenden Stellung in Buchsenteil zu halten. Ferner ist ein Satz von Haltegliedern vorgesehen, die den Stecker in der Entlüftestellung halten.

Beim Entlüften der geöffneten Kupplung strömt Gas in den Ringraum zwischen der Betätigungshülse und der Außenseite des Buchsenteils ein. Die freien Stirnflächen an der Betätigungshülse sind so dimensioniert, dass das einströmende Gas an der vorderen Stirnfläche keine Kräfte erzeugen kann, die dazu führen würden, dass die Betätigungshülse in die Stellung gebracht wird, in der die Halteglieder nicht mehr wirksam sind und den Stecker freigeben. Bei geeigneter Dimensionierung der Flächen ist die Wirkung sogar vom Gasdruck und den Strömungsverhältnissen innerhalb des Ringraums unabhängig.

## Patentansprüche

1. Buchsenteil (1) einer Entlüftungskupplung für Fluidverbindungen,
mit einem einen durchgehenden, zumindest abschnittsweise geraden und rotationssymmetrischen Kanal (18) enthaltenden Grundkörper (2), der von einer Außenumfangsfläche (31) begrenzt ist und der ein vorderes sowie ein hinteres Ende aufweist, wobei von dem vorderen Ende her ein Stecker (71) in den Kanal (18) einführbar ist,
mit wenigstens einer ersten seitlichen Öffnung (36) in dem Grundkörper (2), die den Grundköper (2) durchsetzt und in den Kanal (18) einmündet,
mit wenigstens einem Verriegelungskörper (72), der sich in der ersten seitlichen Öffnung (36) befindet und dazu geeignet ist, wahlweise den Stecker (71) in einer fluiddichten Kuppelstellung fest zu halten,
mit wenigstens einer zweiten seitlichen Öffnung (39) in dem Grundkörper (2), die den Grundköper (2) durchsetzt und in den Kanal (18) einmündet,
mit wenigstens einem Haltekörper (73), der sich in der zweiten Öffnung (39) befindet und dazu geeignet ist, den Stecker (71) in einer Entlüftestellung zu halten,
mit einer auf dem Grundkörper (2) angeordneten und auf dem Grundkörper (2) begrenzt beweglichen Betätigungshülse (6),
- die zusammen mit dem Grundkörper (2) einen axial sich erstreckenden Ringraum begrenzt, in den die beiden seitlichen Öffnungen (37,39) einmünden,
- die an ihrer Innenseite (40) Anlageflächen für den wenigstens einen Verriegelungskörper (72) sowie den wenigstens einen Haltekörper (73) trägt und
- die derart auf dem Grundkörper (2) gelagert ist, dass sie aus einer Haltestellung, in der der Haltekörper (73) den Stecker (71) in dem Kanal (18) hält, durch eine translatorische nach vorne gerichtete Bewegung in eine Freigabestellung zu bringen ist, in der der Stecker (71) aus dem Kanal (18) vollständig zu entfernen ist,
wobei der Ringraum in Richtung auf sein hinteres Ende zumindest zum Teil durch eine an der Betätigunghülse (6) befestigten hintere Reaktionsfläche (50) abgeschlossen ist, die flächenmäßig größer ist als die Summe aller mit der Betätigungshülse (6) verbundenen Flächen, die den Ringraum nach vorne begrenzen, und
mit einer Vorspanneinrichtung (68,69), durch die die in der Freigabestellung befindliche Betätigungshülse (6) in die Haltestellung vorgespannt ist,
wobei die Vorspannkraft und die Flächen, derart bemessen sind, dass unter Druck in den Ringraum einströmendes Fluid an den mit der Betätigungshülse (6) verbundenen vorderen Flächen eine Kraft erzeugen kann, die höchstens so groß ist wie die Summe aus der Vorspannkraft der Vorspanneinrichtung (68,69) und der Kraft, die das Fluid über die hintere Reaktionsfläche an der Betätigungshülse (6) erzeugt.

2. Buchsenteil nach Anspruch 1, **dadurch gekennzeichnet, dass** die Reaktionsfläche von einer Ringschulter gebildet ist.

3. Buchsenteil nach Anspruch 1, **dadurch gekennzeichnet, dass** die Betätigungshülse (6) an ihrem vorderen Ende ein Führungsglied (91) zur Führung auf der Außenumfangsfläche (31) des Buchsenteils (2) aufweist, wobei das Führungsglied (91) zumindest einen Teil der den Ringraum nach vorne begrenzenden Fläche trägt, und dass das Führungsglied (91) in axialer Richtung von wenigstens einem Kanal (92) durchsetzt ist, derart, dass die wirksame Fläche vermindert ist.

4. Buchsenteil nach Anspruch 1, **dadurch gekennzeichnet, dass** der Ringraum an seinem vorderen Ende zumindest zum Teil von einer an dem Buchsenteil (2) befestigtes Schulterfläche (9) begrenzt ist.

5. Buchsenteil nach Anspruch 1, **dadurch gekennzeichnet, dass** der Kanal (18) ein Absperrventil (21, 5) enthält, das durch den Stecker (71) betätigbar ist.

6. Buchsenteil nach Anspruch 1, **dadurch gekennzeichnet, dass** die erste und die zweite seitliche Öffnung (36,39) bezogen auf ihre axiale Erstreckung parallel zu der Achse des Kanals (18) mit einem ihrer Enden auf der selben Höhe bezogen auf die Achse des Kanals (18) liegen.

7. Buchsenteil nach Anspruch 1, **dadurch gekennzeichnet, dass** die erste seitliche Öffnung (36) von einem Schrägschlitz mit der parallelen Flanke gebildet ist, die unter einen spitzen Winkel gegenüber der Achse des Kanals (18) verlaufen und dass der Verriegelungskörper (72) von einem zylindrischen Stift gebildet ist, der mit seinen beiden axialen Enden über die Außenumfangsfläche (31) des Grundkörpers (2) in jeder Stellung übersteht.

8. Buchsenteil nach Anspruch 1, **dadurch gekennzeichnet, dass** die zweite seitliche Öffnung (39) von einem Langloch gebildet ist, dessen längere Achse sich parallel zu der Achse des Kanals (18) erstreckt und die derart gestaltet ist, dass ein darin befindlicher Haltekörper (73) an einem Durchfallen in den Kanal (18) gehindert ist.

9. Buchsenteil nach Anspruch 1, **dadurch gekennzeichnet, dass** der Haltekörper (73) von einer Kugel gebildet ist.

10. Buchsenteil nach Anspruch 1, **dadurch gekennzeichnet, dass** die Betätigungshülse (6) Anlageflächen aufweist, die dazu dienen, den Verriegelungskörper (72) aus der Verriegelungsstellung herauszubewegen.

11. Buchsenteil nach Anspruch 1, **dadurch gekennzeichnet, dass** die Betätigungshülse (6) für den Haltekörper (73) eine erste und eine zweite Anlagefläche (42,44) bildet, von denen die erste Anlagefläche (42) einen radialen Abstand von der Achse des Kanals aufweist, derart, dass ein an der ersten Anlagefläche (42) anliegender Haltekörper (73) in das Lichtraumprofil des Kanals vorragt, während die zweite Anlagefläche einen größeren radialen Abstand aufweist, der so bemessen ist, dass der Haltekörper (73) aus dem Lichtraumprofil des Kanals zurückweichen kann, ohne aus der seitlichen Öffnung freizukommen.

12. Buchsenteil nach Anspruch 1, **dadurch gekennzeichnet, dass** die Vorspanneinrichtung (68,69) zumindest eine Schraubenfeder aufweist, die sich einendes an der Betätigungshülse (6) abstützt.

13. Buchsenteil nach Anspruch 12, **dadurch gekennzeichnet, dass** die Wiederlagerstelle für die Schraubenfeder (68,69) in der Betätigungshülse (6) zumindest von Abschnitten der Reaktionsfläche gebildet ist.

14. Buchsenteil nach. Anspruch 12, **dadurch gekennzeichnet, dass** die Schraubenfeder (68) der Vorspanneinrichtung andernends an dem Verriegelungskörper (72) abgestützt ist.

15. Buchsenteil nach Anspruch 12, **dadurch gekennzeichnet, dass** zwischen der Schraubenfeder (68) und dem Verriegelungskörper (72) ein Druckring (8) liegt.

16. Buchsenteil nach Anspruch 1, **dadurch gekennzeichnet, dass** der Druckring (8) durch eine eigene Schraubenfeder (69), die sich an einer Schulter des Buchsenteils abstützt in Anlage an dem Verriegelungskörper (72) gehalten ist.

## Claims

1. Socket part (1) of a venting coupling for fluid connections,
with a base body (2), which contains a continuous, at least sectionally straight and rotationally symmetric duct (18), is defined by an outer peripheral surface (31) and has a front as well as a rear end, wherein a plug (71) can be inserted into the duct (18) from the front end,
with at least one first lateral opening (36) in the base body (2), which passes through the base body (2) and opens into the duct (18),
with at least one locking body (72), which is located in the first lateral opening (36) and is suitable for firmly holding the plug (71) selectively in a fluid-tight coupling position,
with at least one second lateral opening (39) in the base body (2), which passes through the base body (2) and opens into the duct (18),
with at least one holding body (73), which is located in the second lateral opening (39) and is suitable for holding the plug (71) in a venting position, with an actuating sleeve (6) that is arranged on the base body (2) and is restrictedly movable on the base body (2),
• said actuating sleeve together with the base body (2) defining an axially extending annular space, into which the two lateral openings (37, 39) open,
• said actuating sleeve bearing abutment surfaces on its inside (40) for the at least one locking body (72) as well as the at least one holding body (73), and
• said actuating sleeve being mounted on the base body (2) in such a way that it can be moved out of a holding position, in which the holding body (73) holds the plug (71) in the duct (18), by a translatory forwardly directed movement into a release position, in which the plug (71) can be removed from the duct (18) completely,
wherein the annular space is at least partially closed in the direction of its rear end by a rear reaction surface (50), which is fastened to the actuating sleeve (6) and is larger in surface area than the sum of all surfaces connected to the actuating sleeve (6) that define the annular space to the front, and
with a biasing means (68, 69), by means of which the actuating sleeve (6) located in the release position is biased into the holding position,
wherein the biasing force and the surfaces are dimensioned such that fluid flowing into the annular space under pressure can generate a force on the front surfaces connected to the actuating sleeve (6) that at maximum is as high as the sum of the biasing force of the biasing means (68, 69) and the force that the fluid generates on the actuating sleeve (6) via the rear reaction surface.

2. Socket part according to Claim 1. **characterised in that** the reaction surface is formed by an annular shoulder.

3. Socket part according to Claim 1, **characterised in that** at its front end the actuating sleeve (6) has a guide member (91) for guidance on the outer peripheral surface (31) of the socket part (2), wherein the guide member (91) supports at least a part of the surface defining the annular space to the front, and that at least one duct (92) passes through the guide member (91) in axial direction in such a way that the active surface is reduced.

4. Socket part according to Claim 1, **characterised in that** at its front end the annular space is at least partially defined by a shoulder surface (9) fastened to the socket part (2).

5. Socket part according to Claim 1, **characterised in that** the duct (18) contains a stop valve (21, 5), which can be operated by the plug (71).

6. Socket part according to Claim 1, **characterised in that** with respect to their axial extent parallel to the axis of the duct (18), the first and the second lateral opening (36, 39) lie at the same level with respect to the axis of the duct (18) at one of their ends.

7. Socket part according to Claim 1, **characterised in that** the first lateral opening (36) is formed by a sloping slot with the parallel flank, which runs at an acute angle in relation to the axis of the duct (18), and that the locking body (72) is formed by a cylindrical pin, which at its two axial ends projects beyond the outer peripheral surface (31) of the base body (2) in every position.

8. Socket part according to Claim 1, **characterised in that** the second lateral opening (39) is formed by an elongated hole, the longer axis of which runs parallel to the axis of the duct (18) and which is configured in such a way that a holding body (73) located therein is prevented from falling through into the duct (18).

9. Socket part according to Claim 1, **characterised in that** the holding body (73) is formed by a sphere.

10. Socket part according to Claim 1, **characterised in that** the actuating sleeve (6) has abutment surfaces, which serve to move the locking body (72) out of the locking position.

11. Socket part according to Claim 1, **characterised in that** for the holding body (73) the actuating sleeve (6) forms a first and a second abutment surface (42, 44), of which the first abutment surface (42) is spaced at a radial distance from the axis of the duct in such a way that a holding body (73) abutting against the first abutment surface (42) projects into the clearance profile of the duct, whereas the second abutment surface is spaced at a larger radial distance, which is dimensioned such that the holding body (73) can retract from the clearance profile of the duct without exiting out of the lateral opening.

12. Socket part according to Claim 1, **characterised in that** the biasing means (68, 69) has at least one coil spring, which is supported at one end on the actuating sleeve (6).

13. Socket part according to Claim 12, **characterised in that** the abutment point for the coil spring (68, 69) in the actuating sleeve (6) is formed at least by sections of the reaction surface.

14. Socket part according to Claim 12. **characterised in that** the coil spring (68) of the biasing means is supported at the other end on the locking body (72).

15. Socket part according to Claim 12, **characterised in that** a pressure ring (8) is located between the coil spring (68) and the locking body (72).

16. Socket part according to Claim 1, **characterised in that** the pressure ring (8) is held in abutment against the locking body (72) by is own coil spring (69), which is supported against a shoulder of the socket part.

## Revendications

1. Raccord femelle (1) d'un raccord à évent pour des connexions de fluides, comprenant
un corps de base (2) comportant au moins sur une portion un conduit (18) traversant à symétrie de révolution et rectiligne, lequel corps de base est délimité par une surface périphérique extérieure (31) et présente une extrémité avant et une extrémité arrière, un raccord mâle (71) pouvant être inséré dans le conduit (18) depuis l'extrémité avant,
au moins une première ouverture latérale (36) qui est aménagée dans le corps de base (2), traverse le corps de base (2) et débouche dans le conduit (18),
au moins un corps de verrouillage (72) qui se trouve dans la première ouverture latérale (36) et est adapté pour maintenir le raccord mâle (71) au choix dans une position de couplage étanche aux fluides,
au moins une deuxième ouverture latérale (39) qui est aménagée dans le corps de base (2), traverse le corps de base (2) et débouche dans le conduit (18),
au moins un corps de retenue (73) qui se trouve dans la deuxième ouverture (39) et est adapté pour maintenir le raccord mâle (71) dans une position d'évacuation,
une douille de manoeuvre (6) qui est disposée sur le corps de base (2) et peut être déplacée dans des limites définies sur le corps de base (2) et qui
- délimite avec le corps de base (2) un espace annulaire qui s'étend dans la direction axiale et dans lequel débouchent les deux ouvertures latérales (37, 39),
- porte sur sa paroi intérieure (40) des surfaces d'appui pour le corps de verrouillage (72), au nombre d'au moins un, et le corps de retenue (73), au nombre d'au moins un, et
- est montée sur le corps de base (2) de manière à ce qu'elle puisse être amenée d'une position de retenue, dans laquelle le corps de retenue (73) maintient le raccord mâle (71) dans le conduit (18), par un déplacement translatoire dirigé vers l'avant, dans une position de libération dans laquelle le raccord mâle (71) peut être retiré complètement du conduit (18),
sachant que l'espace annulaire, en direction de son extrémité arrière, est fermé au moins en partie par une surface de réaction arrière (50) qui est fixée à la douille de manoeuvre (6) et dont la superficie est plus grande que la somme de toutes les surfaces qui sont liées à la douille de manoeuvre (6) et délimitent l'espace annulaire vers l'avant, et comprenant
un dispositif de précontrainte (68, 69) par lequel la douille de manoeuvre (6) se trouvant dans la position de libération est mise sous précontrainte en direction de la position de retenue,
sachant que la force de précontrainte et les surfaces sont dimensionnées de manière telle qu'un fluide entrant sous pression dans l'espace annulaire puisse engendrer une force sur les surfaces avant liées à la douille de manoeuvre (6), qui soit au maximum égale à la somme de la force de précontrainte du dispositif de précontrainte (68, 69) et de la force produite par le fluide via la surface de réaction arrière de la douille de manoeuvre (6).

2. Raccord femelle selon la revendication 1, **caractérisé en ce que** la surface de réaction est formée d'un épaulement annulaire.

3. Raccord femelle selon la revendication 1, **caractérisé en ce que** la douille de manoeuvre (6) présente à son extrémité avant un moyen de guidage (91) destiné à assurer le guidage sur la surface périphérique extérieure (31) du raccord femelle (2), ledit moyen de guidage (91) portant au moins une partie de la surface qui délimite l'espace annulaire vers l'avant, et **en ce que** le moyen de guidage (91) est traversé dans la direction axiale par au moins un conduit (92) qui a pour effet de réduire la surface active.

4. Raccord femelle selon la revendication 1, **caractérisé en ce que** l'espace annulaire est limité à son extrémité avant au moins en partie par une surface d'épaulement (9) fixée au raccord femelle (2).

5. Raccord femelle selon la revendication 1, **caractérisé en ce que** le conduit (18) contient une soupape d'arrêt (21, 5) qui peut être actionnée par le raccord mâle (71).

6. Raccord femelle selon la revendication 1, **caractérisé en ce que** la première et la deuxième ouverture latérale (36, 39), rapporté à leur dimension axiale, parallèlement à l'axe du conduit (18), se situent avec l'une de leurs extrémités à la même hauteur par rapport à l'axe du conduit (18).

7. Raccord femelle selon la revendication 1, **caractérisé en ce que** la première ouverture latérale (36) est constituée d'une fente oblique à flancs parallèles qui forment un angle aigu avec l'axe du conduit (18), et **en ce que** le corps de verrouillage (72) est constitué d'une tige cylindrique dont les deux extrémités axiales dépassent dans toutes les positions par rapport à la surface périphérique extérieure (31) du corps de base (2).

8. Raccord femelle selon la revendication 1, **caractérisé en ce que** la deuxième ouverture latérale (39) est constituée d'un trou oblong dont le grand axe est parallèle à l'axe du conduit (18) et qui est agencé de manière telle qu'un corps de retenue (73) qui y est logé ne puisse pas tomber dans le conduit (18).

9. Raccord femelle selon la revendication 1, **caractérisé en ce que** le corps de retenue (73) est formé d'une sphère.

10. Raccord femelle selon la revendication 1, **caractérisé en ce que** la douille de manoeuvre (6) présente des surfaces d'appui qui servent à dégager le corps de verrouillage (72) de sa position de verrouillage.

11. Raccord femelle selon la revendication 1, **caractérisé en ce que** la douille de manoeuvre (6) forme pour le corps de retenue (73) une première et une deuxième surface d'appui (42, 44), où la première surface d'appui (42) présente une distance radiale par rapport à l'axe du conduit, de manière à ce qu'un corps de retenue (73) appliqué contre cette première surface d'appui (42) avance dans le profil d'espace libre du conduit, tandis que la deuxième surface d'appui présente une distance radiale plus grande qui est prévue telle que le corps de retenue (73) puisse reculer hors du profil d'espace libre du conduit sans être dégagé de l'ouverture latérale.

12. Raccord femelle selon la revendication 1, **caractérisé en ce que** le dispositif de précontrainte (68, 69) présente au moins un ressort hélicoïdal qui s'appuie avec une extrémité sur la douille de manoeuvre (6).

13. Raccord femelle selon la revendication 12, **caractérisé en ce que** le point de contre-appui pour le ressort hélicoïdal (68, 69) dans la douille de manoeuvre (6) est formé au moins par des portions de la surface de réaction.

14. Raccord femelle selon la revendication 12, **caractérisé en ce que** le ressort hélicoïdal (68) du dispositif de précontrainte s'appuie avec son autre extrémité sur le corps de verrouillage (72).

15. Raccord femelle selon la revendication 12, **caractérisé en ce qu'**une bague de poussée (8) est disposée entre le ressort hélicoïdal (68) et le corps de verrouillage (72).

16. Raccord femelle selon la revendication 1, **caractérisé en ce que** la bague de poussée (8) est maintenue en appui contre le corps de verrouillage (72) par son propre ressort hélicoïdal (69) qui prend appui sur un épaulement du raccord femelle.
